# EUROPÄISCHE PATENTSCHRIFT

(11) **EP 0 455 114 B1**
(45) Veröffentlichungstag und Bekanntmachung des Hinweises auf die Patenterteilung: **01.03.1995**
(21) Anmeldenummer: 91106559.7
(22) Anmeldetag: 24.04.1991
(51) Int. Cl.: B09B 3/00

(54) **Verfahren und Vorrichtung zum Rückgewinnen von Bestandteilen aus umweltbeeinträchtigende Stoffe enthaltenden Sprühdosen**
Method and equipment for recovering constituents from spray cans containing polluting substances
Procédé et installation pour la récupération des éléments à partir d'aérosols contenant des substances polluantes

(30) Priorität: 30.04.1990 DE 4013965
(43) Veröffentlichungstag der Anmeldung: 06.11.1991
(73) Patentinhaber: Roland, Rolf Emil, D-66557 Illingen (DE)
(72) Erfinder: Roland, Rolf Emil, D-66557 Illingen (DE)
(74) Vertreter: Flaccus, Rolf-Dieter, Dr.

(56) Entgegenhaltungen:
- EP-A- 0 359 106
- DE-A- 3 817 273
- DE-U- 8 805 008

## Beschreibung

Die Erfindung betrifft ein Verfahren und eine Vorrichtung zum Trennen und Sortieren der beim Zerkleinern von umweltbeeinträchtigende und/oder umweltgefährdende Stoffe enthaltenden Dosen oder dergleichen, insbesondere von Treibmittel enthaltenden Sprühdosen, anfallenden Teile, sowie zum ggf. wiederverkaufsfähigen Aufbereiten wenigstens einzelner dieser Teile.

Im Zuge der Bemühungen, Umweltschäden soweit wie möglich zu vermeiden bzw. gering zu halten, gewinnt die gezielte Beseitigung und ggf. Vernichtung, insbesondere aber die Wiederverwertung der Materialien und Stoffe vielbeschickter oder mit einem sonstigen zum Aussondern aus dem Produktions- bzw. aus dem Verbrauchsprozeß zwingender Fehler behafteter, ebenso aber auch bereits benutzter und dabei verbrauchter Gegenstände wie Dosen oder sonstiger entsprechender Behältnisse zunehmend an Bedeutung. Dies erweist sich insbesondere als nicht immer einfach, wenn es sich um Gegenstände aus und/oder mit sehr unterschiedlichen Materialien bzw. Stoffen wie beispielsweise mit Treibmittel betriebenen Spraydosen oder dergleichen Behälter handelt.

Erschwerend ist hierzu unter Umständen die Art der in den Behältern befindlichen Stoffe, da diese zum großen Teil leichtflüchtig und umweltbelastend und/oder toxisch sind, so daß strenge gesetzliche Auflagen hinsichtlich der Behandlung als Sondermüll zu beachten sind. Insbesondere dort, wo beispielsweise überlagerte Bestände beseitigt werden müssen oder wo es innerhalb des Produktions- bzw. Abfüllverfahrens zu Fehlchargen gekommen ist, ist Handel und Gewerbe häufig von sehr hohen Sondermüll-Entsorgungskosten betroffen. Eine Vorrichtung zur gefahrlosen und umweltfreundlichen Zerkleinerung und Beseitigung von Behältern, insbesondere von unter Druck stehenden Metalldosen, welche Treibmittel und/oder Restprodukte enthalten, ist aus der DE-C-37 13 477 bekannt. Diese Vorrichtung weist einen luftdicht abgeschlossenen Arbeitsraum auf, in welchem motorangetriebene Zerkleinerungswerkzeuge angeordnet sind, und welche an seiner Oberseite eine luftdicht verschlossene Schleuse aufweist sowie an seiner Unterseite luftdicht mit einem Abfallcontainer verbunden ist. Der Arbeitsraum ist ferner mit einer Einlaßöffnung für Stickstoff versehen und an eine Abgasleitung angeschlossen.

Während des Betriebs soll im Arbeitsraum stets eine inerte Stickstoffatmosphäre mit leichtem Überdruck gegenüber der Umgebung aufrechterhalten werden, so daß die dem Arbeitsraum mittels einer Fördereinrichtung über die Schleuse zyklisch zugeführten Behälter, selbst wenn es sich dabei um unter hohem Innendruck stehende Metalldosen mit hochbrennbarem Inhalt handeln soll, trotz kaum vermeidbarer Funkenbildung durch die Zerkleinerungswerkzeuge gefahrlos mechanisch zerkleinert werden können, da die im Arbeitsraum vorhandene inerte Atmosphäre zuverlässig jede Gefahr einer Selbstentzündung auch bei schlagartig aus den zerplatzenden Dosen entweichendem Inhalt verhindern soll. Dabei ist vorgesehen, die bei der Zerkleinerung anfallenden festen Bestandteile im Abfallcontainer und evtl. vorhandene Flüssigkeitsbestandteile in einem Sumpf am Boden des Containers zu sammeln, während evtl. gasförmige Bestandteile über die Abgasleitung abgeführt werden. Trotz der gefahrlosen Zerstörung bzw. Zerkleinerung verbrauchter Behältnisse befriedigt diese Vorrichtung nicht völlig, da die Behälter samt ihrer Verschlüsse mit ihrem Inhalt zunächst verhältnismäßig wahllos, d.h. nicht nach ihren einzelnen Bestandteilen bzw. Materialien getrennt zerkleinert werden und dementsprechend auch keine Trennung der einzelnen Bestandteile bzw. Materialien im Sinne ihrer Wiederverwendungsmöglichkeit erzielt wird.

Vorliegende Erfindung macht es sich zur Aufgabe, ein Verfahren und eine Vorrichtung zu schaffen, mit denen eine verbesserte Trennung und Sortierung der beim Zerkleinern mittels einer Einrichtung der vorstehend erwähnten Art anfallenden Teile sowie deren umweltfreundliche Entsorgung, insbesondere aber deren gezielte Aufbereitung zu wiederverkaufsfähigen Produkten wenigstens einzelner Bestandteile möglich ist.

Diese Aufgabe wird erfindungsgemäß mit einem Verfahren nach Anspruch 1 und einer Vorrichtung nach Anspruch 7 gelöst. Zweckmäßige weitere Ausgestaltungen der Erfindung sind in den Unteransprüchen 2 bis 6 sowie 8 bis 17 beschrieben.

Durch das erfindungsgemäße Vorgehen wird insbesondere eine wesentlich verbesserte Trennung der verschiedenen Feststoffe und damit deren gezielte Aufbereitung in wiederverwendungsfähige und wiederverkaufsfähige Produkte ermöglicht. Daneben ist aber sichergestellt, daß auch die flüssigen und/oder gasförmigen Stoffe in umweltschonender und umweltfreundlicher Art und Weise entsorgt werden. Durch die im Kreislauf betriebene ständige Wiederaufbereitung der Flüssigkeitsbäder bzw. der in diesen verwendeten Reinigungsmittel wird insbesondere auch erreicht, daß der Aufwand an Badflüssigkeit und Reinigungsmittel auf das unbedingt notwendige Maß beschränkt wird, was ebenfalls zu einem umweltschonenden und umweltfreundlichen Vorgehen beiträgt.

Die Erfindung ist in der Zeichnung und in einem Ausführungsbeispiel gezeigt und anhand dessen im folgenden erläutert.

Es zeigen:
**Figur 1** in schematischer Darstellung eine an sich bekannte Zerkleinerungsvorrichtung mit dem Austritt der zerkleinerten Bestandteile nachgeordneter Trenn-, Sortier- und Aufbereitungseinrichtung,
**Figur 2** ein Ausführungsbeispiel für die gezielte Wiederaufbereitung der anfallenden Kunststoffteile zu einem wiederverwendbaren und verkaufsfähigen Produkt,
**Figur 3** ein Ausführungsbeispiel für die Reinigungsmittelaufbereitung.

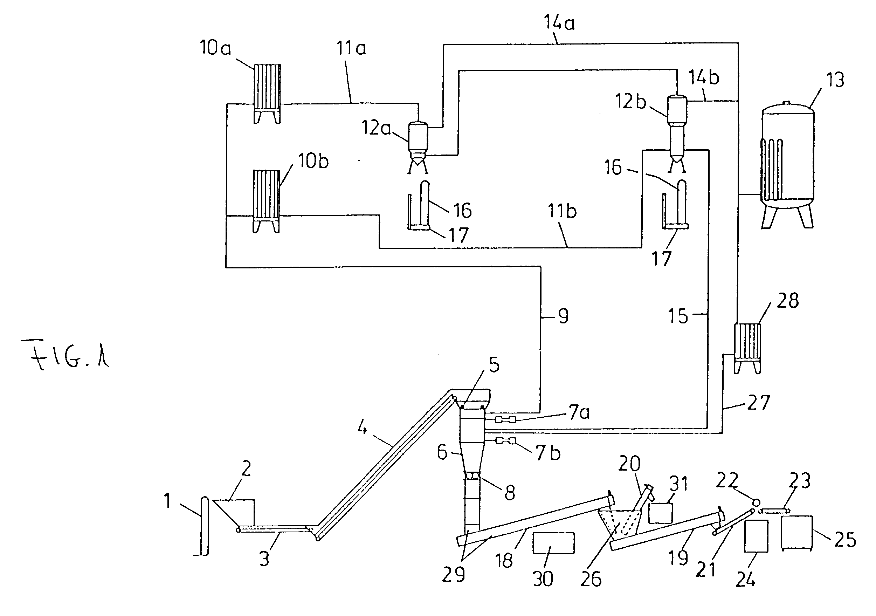

Bei der Vorrichtung gemäß Figur 1 erfolgt die Aufgabe der nicht gezeigten Sprühdosen oder dergleichen mittels des Förderbandes 1 in den Trichter 2, von wo die Dosen mittels der Förderbänder 3 und 4 über die Schleuse 5 in die Zerkleinerungseinrichtung 6 gelangen. Diese ist mit den beiden Schiebern 7a und 7b sowie mit dem Zerkleinerungswerkzeug 8 versehen.

Zur Erzielung einer inerten Atmosphäre ist der Raum zwischen dem oberen Schieber 7a und der Schleuse 5 über die Leitung 9 durch die Verdampfer 10a und 10b mit gasförmigem Stickstoff beaufschlagt. Die Verdampfer 10a und 10b sind über die Leitungen 11a und 11b mit den Kondensationssäulen 12a und 12b verbunden, die über die Leitungen 14a und 14b vom Kaltvergaser 13 mit auf -196°C gekühltem Stickstoff versorgt werden.

Über die Abgasleitung 15 ist der Raum zwischen den Schiebern 7a und 7b an die Kondensationssäule 12b angeschlossen.

Dieser Raum ist ferner zwecks einer Hilfsversorgung mit Stickstoff im Falle eines Stromausfalls über die Leitung 27 und den zwischengeschalteten Verdampfer 28 an den Kaltvergaser 13 angeschlossen.

Mit 16 sind Flüssiggas-Flaschen und mit 17 dazugehörige Wiegeeinrichtungen bezeichnet, die zur Aufnahme und Entsorgung der in den Kondensationssäulen 12a und 12b verflüssigten und diesen über die Abgasleitung 15 aus dem Raum zwischen den Schiebern 7a und 7b zugeführten gasförmigen Bestandteilen dienen.

Nach Aufgabe der Dosen und dergleichen gelangen diese in die Zerkleinerungseinrichtung 6, wo sie durch das Schneidewerkzeug 8 in kleine Teile zerlegt bzw. zerschnitten werden. Die zerkleinerten Teile gelangen in das nicht näher gezeigte Gehäuse der Förderschnecke 18, wobei sich die flüssigen Bestandteile im unteren Bereich des Förderschneckengehäuses in Form eines Sumpfes absetzen, während die festen Bestandteile durch die Förderschnecke 18 nach oben weitertransportiert werden.

Sobald sich im unteren Teil der Zerkleinerungsanlage 6 bzw. des Gehäuses der Förderschnecke 18 eine vorgegebene bestimmte Menge Flüssigkeit angesammelt hat, beispielsweise der mit 29 bezeichnete Flüssigkeitsspiegel erreicht ist, wird weiterhin zukommende Flüssigkeit fortlaufend abgezogen und in der mit 30 schematisch angedeuteten Anlage nach dem bekannten Natriumverfahren dehalogeniert und im weiteren unter Einhaltung der einschlägigen Bestimmungen und Vorschriften in hier nicht näher gezeigter Weise entsorgt.

Am oberen Ende der Förderschnecke 18 werden die festen Bestandteile in den Trichter 26 aufgegeben, der auf dem unteren Ende des ebenfalls nicht näher gezeigten Gehäuses der Förderschnecke 19 flüssigkeitsdicht angeordnet ist. Der untere Teil des Gehäuses der Förderschnecke 19 und der Trichter 26 sind mit einem mit Reinigungsmittel versehenen Flüssigkeitsbad teilweise gefüllt. Als Reinigungsmitteleignen sich Industrie- oder Haushaltsreiniger mit oberflächenaktiven Bestandteilen und fettlösenden Eigenschaften.

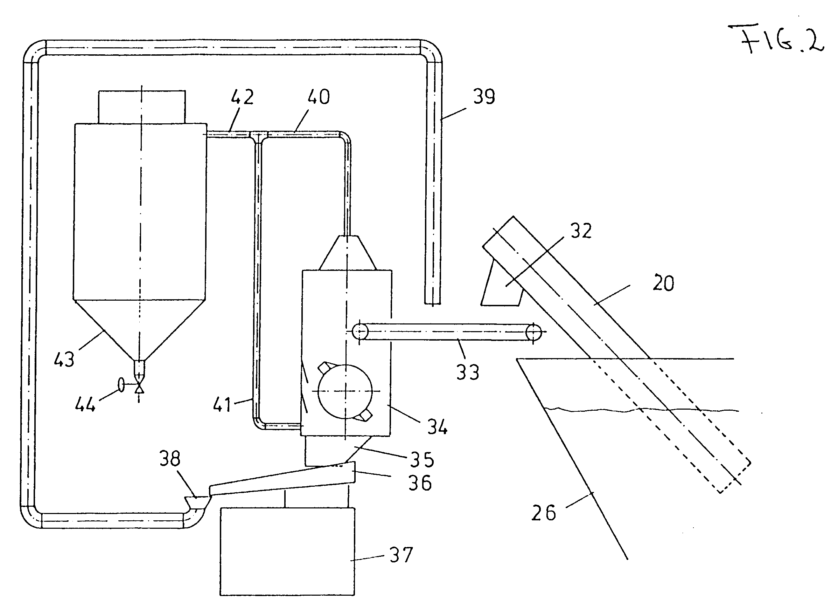

Der Trichter 26 ist bevorzugt mit einem nicht gezeigten Deckel luftdicht verschlossen und über eine ebenfalls nicht gezeigte Leitung mit dem oberen Ende des Gehäuses der Förderschnecke 19 verbunden, von wo eine nicht gezeigte Verbindungsleitung zur Leitung 15 hin geführt sein kann, um auf diese Weise eventuell noch vorhandene Reste an gasförmigen Bestandteilen abführen und entsorgen zu können. Infolge ihres geringeren spezifischen Gewichtes schwimmen die Kunststoffteile in diesem Flüssigkeitsbad im Trichter 26 auf, d.h. nach oben und werden von der heiteren Förderschnecke 20 ausgetragen und zu der schematisch angedeuteten und mit 31 bezeichneten sowie in Figur 2 gezeigten und im Zusammenhang damit näher beschriebenen Aufbereitungseinrichtung transportiert.
Die schwereren Metallteile werden von der Förderschnecke 19 auf das Förderband 21 und von diesem zur Magnetabscheideeinrichtung 22 transportiert, von welcher die eisenhaltigen Metallteile auf das weitere Förderband 23 übergeben werden, wogegen die nicht-eisenhaltigen Metallteile aus Aluminium oder dergleichen zwischen den Förderbändern 21 und 23 hindurch in den Behälter 24 fallen. Die eisenhaltigen Metallteile gelangen über das Förderband 23 in den Behälter 25.

Bei der in Figur 2 gezeigten Kunststoffaufbereitungseinrichtung ist der mit ihrem unteren Ende samt Gehäuse in das Flüssigkeitsbad des Trichters 26 eingetauchten Förderschnecke 20 mit Austragstutzen 32 das Förderband 33 nachgeordnet und in das Gehäuse der mit einem Schneidwerkzeug ausgerüsteten Schneideinheit 34 hineingeführt. Am unteren Ende des Gehäuses der Schneideinheit 34 ist der trichterförmige Auslaß 35 und unter diesem sind das Sieb 36 sowie der Behälter 37 angeordnet. Das Sieb 36 mündet in die trichterartige Erweiterung 38 der Leitung 39, deren Ende sich oberhalb des Förderbandes 33 befindet. Am oberen Ende des Gehäuses der Schneideinheit 34 ist die Leitung 40 und am unteren Ende die Leitung 41 angeschlossen. Die Leitungen 40 und 41 sind mittels der gemeinsamen Leitungen 42 an den Zyklon 43 mit am unteren Ende angeordneten Entnahmeventil 44 angeschlossen.

Die von der Förderschnecke 20 aus dem Trichter 26 weitertransportierten Kunststoffbestandteile gelangen über den Austragstutzen 32 aufdas Förderband 33 und von diesem in das Gehäuse der Schneideinrichtung 34, wo sie vom Schneidwerkzeug in vorhergesehener Weise auf ein bestimmtes Maß,beispielsweise in kleine Späne od.dgl. von 4-8 mm, zerschnitten werden. Über den Auslaß 35 gelangen die Späne auf das vorzugsweise als Rüttelsieb ausgebildete Sieb 36, wobei die auf das vorgesehene Maß zugeschnittenen Teilchen durch das Sieb 36 hindurch in den Behälter 37 fallen, wogegen alle diejenigen Teilchen, die eine noch zu große Abmessung aufweisen, über das Sieb 36 und die Erweiterung 38 in die Leitung 39 gelangen, von wo sie mittels einer nicht gezeigten Einrichtung, beispielsweise einem Gebläse oder einer Saugeinrichtung, auf das Förderband 33 zurückgeführt und nachfolgend einem weiteren Schneidvorgang zugeführt werden. Über die Leitungen 40, 41 und 42 gelangen die beim Schneidvorgang anfallenden staubförmigen Abfallteilchen in den Zyklon 43, in dem sie von Zeit zu Zeit gesammelt über das Ventil 44 entnommen werden können.

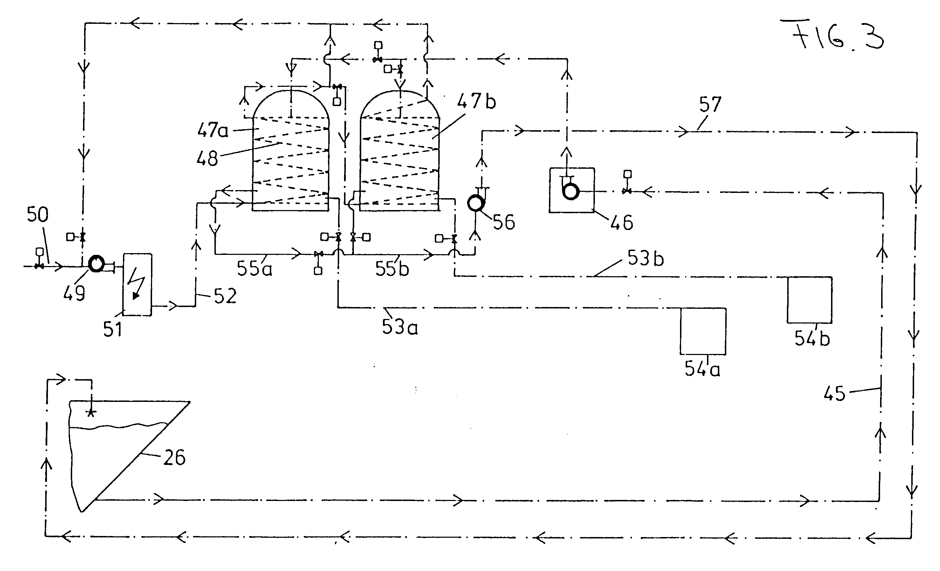

Bei der in Fig. 3 gezeigten Reinigungsmittelaufbereitungseinrichtung wird aus dem Trichter 26 Reinigungsmittel über die Leitung 45 mittels der Pumpe 46 zu den Entschlammungsbehältern 47a und 47b transportiert. In den Entschlammungsbehältern 47a und 47b sind die mit Warmwasser von vorzugsweise 65°C gespeisten Rohrschlangen 48 angeordnet, wobei das über die Pumpe 49 aus der Leitung 50 zur Warmwasserbereitungsanlage 51 und von dieser über die Leitung 52 weitertransportierte Wasser zunächst am unteren Ende des Behälters 47a zu- und an dessen oberem Ende herausgeführt und sodann weiterhin am unteren Ende des Behälters 47b in diesen hinein- und an dessen oberem Ende wieder herausgeführt und zur Leitung 50 zurückgeführt wird.

Der sich in den Behältern 47a und 47b aus dem Reinigungsmittel absetzende Schlamm wird über die Leitungen 53a und 53b in die Behälter 54a und 54b, bei denen es sich bevorzugt um bekannte Transport- und Lagerbehälter nach DIN handelt, abgeführt, wogegen das vom Schlamm befreite Reinigungsmittel über die Leitungen 55a und 55b sowie die Pumpe 56 und die Leitung 57 in den Trichter 26, wahlweise auch in den Trichter 26 und/oder das Gehäuse der Förderschnecke 19, zurückgeführt wird.

Über die in der Figur gezeigten, hier aber nicht näher beschriebenen, Ventile erfolgt die Steuerung der Anlage in der jeweils erforderlichen Art und Weise, wobei selbstverständlich auch eine automatische Steuerung vorgesehen sein kann.

## Patentansprüche

1. Verfahren zum Trennen und Sortieren der Komponenten von umweltbeeinträchtigende und/oder -gefährdende Stoffe und insbesondere Treibmittel enthaltenden Dosen bzw. Sprühdosen, wobei die Dosen in einen unter Luftabschluß mit einer inerten Atmosphäre, z. B. Stickstoffatmosphäre gefüllten Raum eingeschleust und darin zerkleinert und die dabei freiwerdenden gasförmigen, flüssigen und festen Komponenten aufgefangen werden, dadurch gekennzeichnet, daß die bei der Zerkleinerung anfallenden festen, flüssigen und/oder gasförmigen Komponenten getrennt weiter aufbereitet werden, wobei zunächst die festen Komponenten von der Flüssigkeit getrennt, sodann einem Bad mit einer Reinigungsflüssigkeit aufgegeben, darin gewaschen und zugleich durch Sink-Schwimmscheidung einer Sortierung in Kunststoff- sowie Metallteile unterzogen und diese Teile danach in getrennten Arbeitsschritten vorzugsweise mechanisch zuende aufbereitet werden, wobei die Flüssigkeit fallweise unter Zugabe einer Natriumverbindung dehalogeniert und sodann entsorgt und die gasförmigen Bestandteile abgezogen und bevorzugt in den Stickstoffkreislauf des Verfahrens eingeleitet und darin kondensiert werden.

2. Verfahren nach Anspruch 1, dadurch gekennzeichnet, daß die Aufbereitung der getrennten Komponenten unter Abschluß gegenüber der Umgebungsluft weiterhin unter einer inerten, vorzugsweise Stickstoffatmosphäre vorgenommen wird.

3. Verfahren nach den Ansprüchen 1 und 2, dadurch gekennzeichnet, daß die Reinigungsflüssigkeit kontinuierlich aufbereitet wird, indem aus dieser fortlaufend Badflüssigkeit abgezogen und durch eine Reinigungsmittel-Aufbereitung hindurchgeführt und die derart gereinigte Badflüssigkeit in das Reinigungsbad zurückgeführt sowie die bei der Aufbereitung angefallenen Verunreinigungen ausgeschieden und entsorgt werden.

4. Verfahren nach einem der Ansprüche 1 bis 3, dadurch gekennzeichnet, daß als Reinigungsflüssigkeit Wasser mit einem Zusatz von Reinigungsmittel mit oberflächenaktiven und/oder fettlösenden Eingenschaften verwendet wird.

5. Verfahren nach Anspruch 1, dadurch gekennzeichnet, daß die Kunststoffteile bei ihrer weiteren Aufbereitung bis auf eine vorgegebene maximale Korngröße weiter zerkleinert werden, vorzugsweise bis auf kleine Späne oder dergleichen von 4 bis 8 mm.

6. Verfahren nach Anspruch 1, dadurch gekennzeichnet, daß die Metallteile bei ihrer weiteren Aufbereitung durch Magnetscheidung in ferromagnetische und nicht-ferromagnetische, z. B. Leichtmetallteile sortiert und diese Teile einer getrennten Wiederverwertung zugeführt werden.

7. Vorrichtung mit einer durch eine gasdichte Schleuse ausgebildeten Aufgabeeinrichtung gegenüber der Umgebung abgschlossenen und an eine Stickstoffquelle angeschlossenen Zerkleinerungsvorrichtung, insbesondere zur Durchführung des Verfahrens nach den Ansprüchen 1 bis 6, gekennzeichnet durch:
- eine der Zerkleinerungsvorrichtung (6) in schräg ansteigender Lage nachgeordnete erste Förderschnecke (18), deren geschlossenes Gehäuse am unteren Bereich gasdicht mit der Zerkleinerungsvorrichtung (6) verbunden und an einen zur Dehalogenierung mittels Natriumverbindung ausgebildeten, zur Aufnahme der Flüssigkeit vorgesehenen Behälter (30) angeschlossen ist und eine obere Austragsöffnung aufweist,
- eine der ersten Förderschnecke (18) nachgeordnete, ebenfalls schräg ansteigende zweite Förderschnecke (19), deren geschlossenes Gehäuse am Aufgabeende mit einem Trichter (26) zur Aufnahme eines Reinigungsmittelbades ausgebildet und gasdicht an die Austragsöffnung der ersten Förderschnecke (18) angeschlossen, zum Transport der metallischen Komponenten ausgebildet ist,
- eine von oben in den Trichter (26) bis unterhalb der Oberfläche in das Reinigungsmittelbad eintauchende, steil nach oben geführte, mit ihrem Austrag an eine Zerkleinerungsvorrichtung (31) angeschlossene dritte Förderschnecke (20) zum Abschöpfen der Kunststoffteile von der Oberfläche des Reinigungsmittelbades,
- ein der zweiten Förderschnecke (19) nachgeordnetes, zu einem Magnetscheider (22) führendes erstes Förderband (21) und ein im horizontalen Abstand von diesem angeordnetes zweites Förderband (23), sowie unterhalb der Förderbänder (21,23) angeordnete Aufnahmebehälter (24,25).

8. Vorrichtung nach Anspruch 7, dadurch gekennzeichnet, daß die Zerkleinerungsvorrichtung (31) ein Klassiersieb (36) mit einem darunter zur Aufnahme des Siebdurchganges angeordneten Behälter (37) und eine Rezirkulierungseinrichtung (38,39,33) für die Rückführung vom Siebüberlauf zur Aufgabeseite der Zerkleinerungsvorrichtung (31) aufweist.

9. Vorrichtung nach einem der Ansprüche 7 und 8, dadurch gekennzeichnet, daß zwischen dem Austrag der dritten Förderschnecke (20) und der Schneideinrichtung (31) ein Aufgabe-Förderband (33) angeordnet und die Rezirkulierungseinrichtung (38,39) über diesem endend angeordnet ist.

10. Vorrichtung nach einem der Ansprüche 7 bis 9, dadurch gekennzeichnet, daß die Zerkleinerungsvorrichtung (31) eine Schneideinrichtung und eine Absaugeinrichtung mit einem Zyklon (40 bis 44) aufweist.

11. Vorrichtung nach einem der Ansprüche 7 bis 10, dadurch gekennzeichnet, daß das Reinigungsmittelbad des Trichters (26) an eine Reinigungsmittelaufbereitungseinrichtung angeschlossen ist und diese die Abzugsleitung (45) mit der Pumpe (46), die Entschlammungsbehälter (47a) und (47b) mit daran angeschlossenen Leitungen (53a, 53b) und Schlammbehältern (54a,54b) und die Rückführungsleitungen (55a,55b) sowie die Pumpe (56) mit der Rückführleitung (57) umfaßt.

## Claims

1. A process for separating and sorting components of cans or spray cans, respectively, containing substances having an environmental impact and/or being damaging to the environment, in particular propellants, whereby the cans are fed into a chamber which is filled, under exclusion of air, with an inert atmosphere, e.g. a nitrogen atmosphere, and are comminuted therein, and the gaseous, liquid and solid components released in this process are collected, characterized in that the solid, liquid and/or gaseous components accumulating as a result of the comminution process are separately subjected to further processing, whereby first the solid components are separated from the liquid, whereupon they are fed into a bath comprising a washing liquid, washed therein and simultaneously subjected to sorting into plastics and metal parts using a flotation-settling separation method, and whereby these parts are thereafter subjected to final processing, preferably a mechanical one, in separate operational steps, whereby the liquid is optionally dehalogenated by using a sodium compound, and is thereafter disposed of, and the gaseous components are drawn off and preferably fed into the nitrogen circle of the process and condensed therein.

2. The process according to claim 1, characterized in that the processing of the separated components is continued, under exclusion from the ambient air, under an inert atmosphere, preferably a nitrogen atmosphere.

3. The process according to claims 1 and 2, characterized in that the washing liquid is reprocessed continuously by continuously drawing off bath liquid therefrom and leading it through a cleansing agent reprocessing installation and conducting the thus clarified bath liquid back to the cleaning bath, and by separating and disposing the impurities which have accumulated as a result of the processing.

4. The process according to any one of the claims 1 to 3, characterized in that as washing liquid water is employed with an addition of cleansing agent having surface active and/or fat-dissolving properties.

5. The process according to claim 1, characterized in that the plastics parts are, during the continued processing thereof, further comminuted to a pre-determined maximum particle size, prefereably to small chippings or the like of 4 to 8 mm.

6. The process according to claim 1, characterized in that the metal parts, during the continued processing thereof, are sorted by magnetic extraction into ferro-magnetic and non-ferromagnetic parts, e.g. light metal parts, and that these parts are subjected to separate recycling.

7. Equipment comprising a comminution device which is sealed from the environment by a feeding device in the form of a gas-tight lock and is connected to a nitrogen source, especially for carrying out the process according to claims 1 to 6, characterized by:
- a first conveying screw (18) which follows the comminution device (6) in an inclined ascending position and whose closed casing is connected at its lower portion to the comminution device (6), forming a gas-tight seal, and to a container (30) designed for dehalogination by means of a sodium compound and intended for receiving the liquid, and which casing is provided with an upper discharge aperture,
- a second conveying screw (19) following the first conveying screw (18) likewise in an inclined ascending position and whose closed casing is provided at the feed end with a funnel (26) for receiving a cleansing-agent bath and is connected to the discharge aperture of the first conveying screw (18) such that a gas-tight seal is formed, for transporting the metallic components,
- a third, steeply rising, conveying screw (20) which, from above, is immersed in the funnel (26) to below the surface of the cleansing agent bath and is connected with its discharge to a comminution device (31), for skimming the plastics parts from the surface of the cleansing agent bath.
- a first conveyor belt (21) following the second conveying screw (19) and leading to a magnetic separator (22), and a second conveyor belt (23) arranged at a horizontal distance from the first conveyor belt, as well as receptacles (24, 25) arranged below the conveyor belts (21, 23).

8. The process according to claim 7, characterized in that the comminuting device (31) is a classifying screen (36) having a container (37) arranged therebelow for receiving the screen underflow, and a recirculation facility (38, 39, 33) for the return from the screen overflow to the feed side of the comminution device (31).

9. The process according to any one of claims 7 to 8, characterized in that between the discharge of the third conveying screw (20) and the cutting device (31) there is arranged a feed conveyor belt (33), and that the recirculation facility (38, 39) is located with its end above the latter.

10. The process according to any one of claims 7 to 9, characterized in that the comminution device (31) has a cutting device and a suction plant with a cyclone (40 to 44).

11. The process according to any one of claims 7 to 10, characterized in that the cleansing agent bath of the funnel (26) is connected to a cleansing agent reprocessing installation and that said cleansing agent reprocessing installation comprises the discharge line (45) with the pump (46), the desludging containers (47a) and (47b) with lines (53a, 53b) connected thereto and sludge containers (54a, 54b), and the return lines (55a, 55b) as well as the pump (56) with the return line (57).

## Revendications

1. Procédé de séparation et de triage des composants de matériaux nuisibles et/ou dangereux pour l'environnement et, plus spécialement, de boîtes ou de boîtes de pulvérisation contenant des agents propulseurs, conformément auquel les boîtes sont introduites sous exclusion d'air dans un espace rempli d'une atmosphère inerte, par exemple une atmosphère d'azote et y sont déchiquetées et les composants libérés, gazeux, liquides et solides sont prélevés, caractérisé en ce que les composants solides, liquides et/ou gazeux que l'on rencontre au cours du déchiquetage sont davantage traités isolément, où on sépare d'abord les composants solides du liquide, on les introduit ensuite dans un bain contenant un liquide de nettoyage, on les y lave et on les soumet à un triage en pièces de matières plastiques comme aussi métalliques et on achève ensuite le traitement de ces pièces, de préférence par voie mécanique, au cours d'étapes opératoires séparées, où le liquide est déshalogéné le cas échéant sous addition d'un composé du sodium et est ensuite évacué et les constituants gazeux sont prélevés et, de préférence introduits dans le circuit d'azote du procédé et y sont condensés.

2. Procédé suivant la revendication 1, caractérisé en ce que le traitement des composants séparés sous exclusion de l'air environnant s'entreprend en outre sous une atmosphère inerte, de préférence d'azote.

3. Procédé suivant les revendications 1 et 2, caractérisé en ce que le liquide de nettoyage est continuellement traité, en ce sens qu'à partir de celui-ci, on prélève continuellement du liquide du bain et on le conduit à travers un traitement par un agent de nettoyage et on renvoie ou recycle le liquide du bain ainsi épuré dans le bain de nettoyage, et les impuretés obtenues au cours de ce traitement sont séparées et évacuées.

4. Procédé suivant l'une quelconque des revendications 1 à 3, caractérisé en ce qu'à titre de liquide de nettoyage, on utilise de l'eau avec une addition d'agent de nettoyage à propriétés tensioactives et/ou liposolvantes.

5. Procédé suivant la revendication 1, caractérisé en ce que les pièces en matières plastiques sont davantage déchiquetées ou concassées ou broyées au cours de la poursuite de leur traitement jusqu'à un calibre des grains maximum prédéterminé, de préférence en petits copeaux, particules ou analogues de 4 à 8 mm.

6. Procédé suivant la revendication 1, caractérisé en ce que les pièces métalliques sont triées au cours de la poursuite de leur traitement par séparation magnétique en pièces ferromagnétiques et non ferromagnétiques, par exemple en pièces de métaux légers et on envoie ces pièces à une réutilisation séparée.

7. Installation qui comporte un dispositif d'alimentation réalisé sous forme de sas étanche aux gaz, hermétiquement isolé de l'environnement et un dispositif de déchiquetage, concassage ou broyage raccordé à une source d'azote, plus particulièrement pour la mise en oeuvre du procédé suivant l'une quelconque des revendications 1 à 6, caractérisé par :
- une première vis convoyeuse (18) raccordée en position oblique ascendante à la suite d'un dispositif de déchiquetage, concassage ou broyage (6), vis dont le carter ou le boitier fermé est raccordé de manière étanche aux gaz par sa partie inférieure au dispositif de déchiquetage, concassage ou broyage (6) et est raccordé a un réservoir (30) prévu pour la déshalogénation à l'aide d'un composé du sodium, destiné à recueillir le liquide et présente une ouverture de sortie supérieure,
- une seconde vis convoyeuse (19) également en position oblique ascendante agencée à la suite de la première vis convoyeuse (18), seconde vis dont le boîtier ou carter fermé est réalisé à l'extrémité d'alimentation avec une trémie (26) destinée à recevoir un bain d'agent de nettoyage et est raccordé de manière étanche au gaz à l'extrémité de sortie de la première vis convoyeuse (18), en vue du transport des composants métalliques,
- une troisième vis convoyeuse (20) plongeant depuis le haut dans la trémie (26) jusqu'en dessous de la surface dans le bain d'agent de nettoyage, en pente ascendante raide, raccordée par son extrémité de sortie à un dispositif de déchiquetage, concassage ou broyage (31) pour récolter les pièces en matières plastiques à partir de la surface du bain d'agent de nettoyage,
- une première bande transporteuse (21) agencée à la suite de la seconde vis convoyeuse (19) et conduisant à un séparateur magnétique (22) et une seconde bande transporteuse (23) agencée à une certaine distance horizontale de la première bande transporteuse, ainsi qu'un récipient collecteur (24, 25) agencé en dessous de la bande transporteuse (21, 23).

8. Installation suivant la revendication 7, caracterisée en ce que le dispositif de déchiquetage, concassage ou broyage (31) présente un tamis cribleur (36) avec le réservoir (37) agencé sous le tamis pour collecter les matériaux qui ont traversé le tamis ainsi qu'un dispositif de recyclage (38, 39, 33) pour ramener le reflux du tamis au côté alimentation du dispositif de déchiquetage, concassage ou broyage (31).

9. Installation suivant l'une quelconque des revendications 7 et 8, caractérisée en ce qu'entre la sortie de la troisième vis convoyeuse (20) et le dispositif de coupe (31) est agencée une bande transporteuse d'alimentation (33) et le dispositif de recyclage (38, 39) est agencé de manière à se terminer au-dessus de cette bande (33).

10. Installation suivant l'une quelconque des revendications 7 à 9, caractérisée en ce que le dispositif de déchiquetage, concassage ou broyage (31) présente un dispositif de coupe et un dispositif d'aspiration comportant un cyclone (40 à 44).

11. Installation suivant l'une quelconque des revendications 7 à 10, caractérisée en ce que le bain d'agent de nettoyage de la trémie (26) est raccordé à un dispositif de traitement d'agent de nettoyage et ce dispositif de traitement d'agent de nettoyage comprend la conduite d'évacuation (45) avec la pompe (46), le réservoir ou récipient d'enlèvement des boues (47a) et (47b) avec des conduits y raccordées (53a, 53b) et des réservoirs de boue (54a, 54b) et les conduites de recyclage (55a, 55b), ainsi que la pompe (56) avec la conduite de recyclage (57).
